# EUROPEAN PATENT APPLICATION

(11) **EP 3 018 573 A1**
(43) Date of publication of application: **11.05.2016**
(21) Application number: 15190525.4
(22) Date of filing: 20.10.2015
(51) Int. Cl.: G06F 3/06, G06F 12/00

(54) **DISK ARRAY DEVICE, DISK CONTROL DEVICE, SOLID STATE DRIVE, DISK CONTROL METHOD, AND RECORDING MEDIUM**

(30) Priority: 05.11.2014 JP 2014225394
(71) Applicant: NEC Corporation, Minato-ku, Tokyo 108-8001 (JP)
(72) Inventor: KURITA, Shun, Tokyo, Tokyo 108-8001 (JP)
(74) Representative: Vossius & Partner Patentanwälte Rechtsanwälte mbB

(57) **Abstract**

A disk array device is provided that enables distinction between an UNMAPPED state of LBA in a SSD and abnormality of data. The disk array device includes a solid state drive that provides status information indicating whether a physical region constituting a unit to be deleted is allocated to a logical block addressing, and control means which, upon receipt of zero data in which values of data and a trailer are all zero from the solid state drive, transmits the data to a host apparatus in accordance with the status information provided.

## Description

This application is based upon and claims the benefit of priority from Japanese Patent Application No. 2014-225394, filed on November 5, 2014, the disclosure of which is incorporated herein in its entirety by reference.

### TECHNICAL FIELD

The present invention relates to a disk control technique, and more particularly to a technique of extending the life span of a solid state drive.

### BACKGROUND ART

Disk array devices are known that include a plurality of storage devices such as hard disk drives (HDD) or solid state drives (SSD) constituting an array. A technique called thin provisioning is involved with such disk array devices. By the thin provisioning, the disk array device divides the physical region of the array into sectors of a certain size called extent (physical extent) for management purpose, and virtually allocates the physical extent when making a write access to a logical volume. Through such a process of the thin provisioning, the physical capacity of the disk can be reduced.

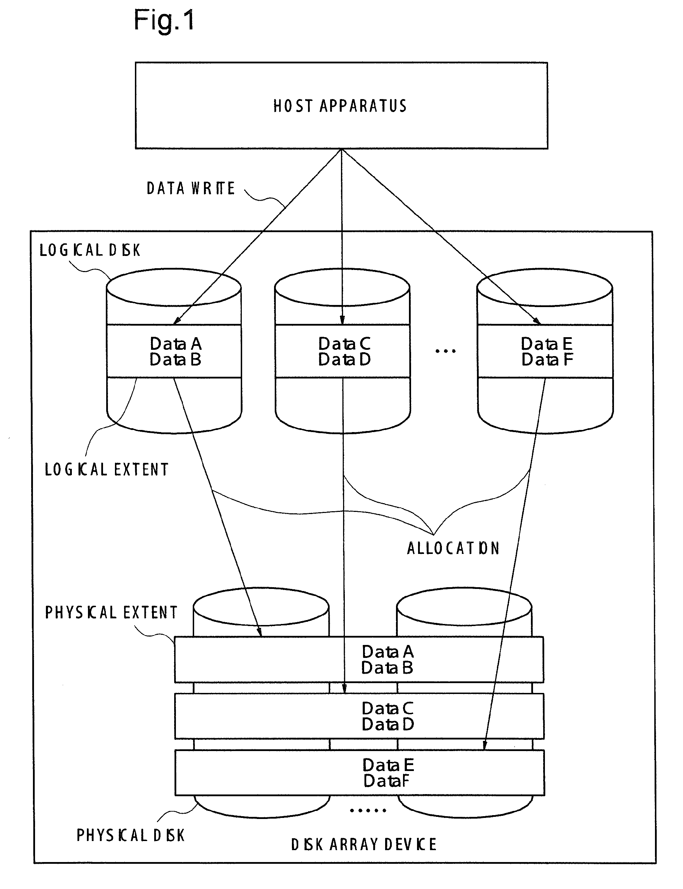

By the thin provisioning, the allocation of the physical extent is triggered by data write performed by a host apparatus. Fig. 1 is a diagram showing an image of the physical extent allocation. In addition, the physical extent that is no longer necessary is released by a release command (for example, UNMAP command of small computer system interface (SCSI) command) from the host apparatus.

When the UNMAP command is issued with designation of a range that matches one physical extent, the disk array device releases the corresponding physical extent. The released physical extent is subsequently allocated as region for data write, when the host apparatus newly writes data. The disk array device keeps the data in the physical extent unchanged when releasing the physical extent. Then when the physical extent is newly allocated as region for data write, the disk array updates the data in the physical extent.

In contrast, when the UNMAP command is issued with designation of a range smaller than the range corresponding to one physical extent, the data in the physical extent but outside the range designated by the UNMAP command has to be retained. Accordingly, the disk array device is unable to release the entirety of the physical extent. In this case, in addition, the host apparatus expects, when reading the range for which the UNMAP command has been issued, that data of "0" will be returned.

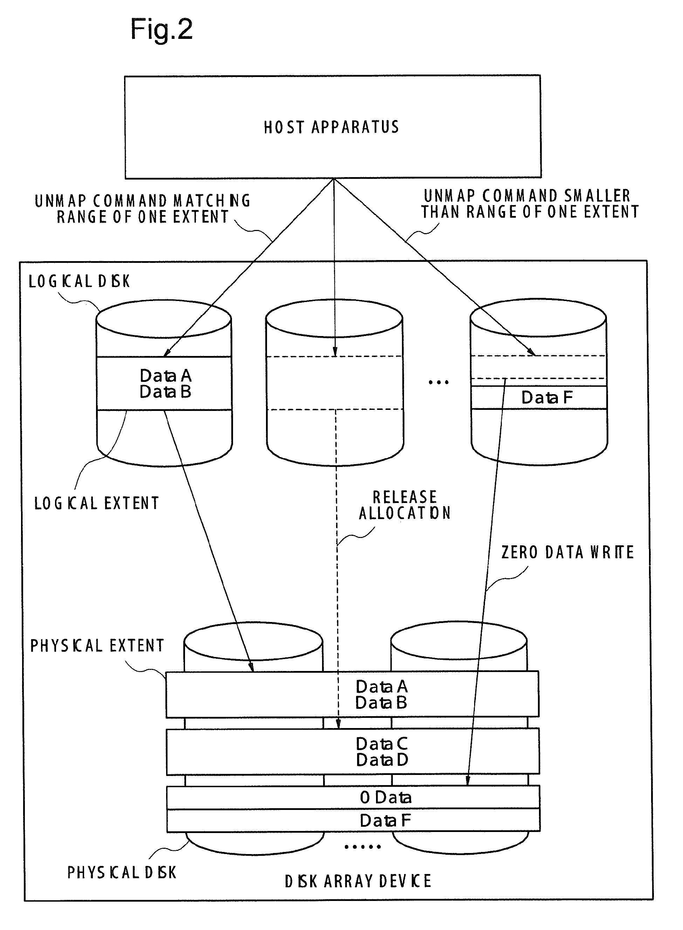

PTL 1 discloses a technique for handling the region release command (UNMAP command) issued with designation of a range smaller than the range corresponding to one physical extent. The storage device according to PTL 1 writes "0" in the range designated by the UNMAP command when the designated range is smaller than the range corresponding to one physical extent. Hereinafter, the action of writing "0" will be referred to as "zero data write". Then the storage device periodically checks whether all the data in the physical extent has been rewritten as "0", for example by the issuance of the UNMAP command, to thereby release the physical extent. Fig. 2 is a diagram showing an image of the execution of the UNMAP command by the storage device.

PTL 2 discloses a technique similar to that of PTL 1. The memory system according to PTL 2 receives from a host a deletion notice (UNMAP command) designating a kill region of a logical address, with respect to data of an amount smaller than a unit for management (for example, physical extent). In this case, the memory system writes a predetermined data pattern in a region of a physical address on a non-volatile memory, corresponding to the region included in the kill region and smaller than the unit for management on a logical-physical conversion table. The memory system further writes an invalid value in the physical address corresponding to a releasable region constituting the unit for management fully covered with the predetermined data pattern, on the logical-physical conversion table. The memory system thus releases the region of the logical address corresponding to the releasable region constituting the unit for management.

However, the techniques according to PTL 1 and PTL 2 have the following drawbacks when the disk array device is constituted of SSDs.

In the SSD, the number of data writing times in a Negative AND (NAND) block is limited. Here, the NAND block refers to a block constituting a unit to be deleted when updating the data. Accordingly, the increase in number of data writing times in the SSD leads to shortened life span of the SSD. When the UNMAP command is issued with designation of a range smaller than the range corresponding to one physical extent, predetermined data (for example, "0") is written in the SSD in the range designated by the UNMAP command. When all the data in the physical extent has been rewritten to the predetermined data, for example by subsequent issuance of the UNMAP command, the physical extent is released. Therefore, when the UNMAP command is issued with designation of a range smaller than the range corresponding to one physical extent, the number of data writing times is increased each time the predetermined data is written.

PTL 3 discloses a solution to the foregoing drawback. PTL 3 proposes storing a list of ranges for which the UNMAP command has been issued when the designated range is smaller than the range corresponding to one physical extent, thereby reducing the zero data write.

However, the technique according to PTL 3 has the following drawbacks. First, the list is finite, and the zero data write is performed with respect to the UNMAP command that has overflowed from the list. In such a case, the number of data writing times is increased. Second, the list includes management information, and therefore the management information is required for each of the logical drive (LD) and the SSD, which leads to an increase in usage of the memory of the disk array device. Therefore, the cache memory capacity available to the disk array device is reduced, or installing a larger memory leads to an increase in cost.

PTL 4 discloses a solution to the foregoing drawbacks originating from the technique of PTL 3. The storage system according to PTL 4 includes a plurality of flash packages constituting one or more groups of redundant arrays of inexpensive disks (RAID), and a controller connected to the plurality of flash packages. The flash packages each include a plurality of flash chips including a plurality of physical blocks. The controller identifies a target region related to an unnecessary region, and transmits a release command designating an address range allocated to the logical block included in the target region, to a drive managing the address range. The drive then releases the corresponding sector, and the logical sector managed by the drive is managed as object to be released. Then when all the logical sectors in the logical block are turned to the object to be released, the physical block is released from the logical block.

PTL 5 discloses a technique for increasing free space in a high-speed storage medium (for example, SSD). In the information storage device according to PTL 5, when an information deletion control unit detects a deletion request from a host, an information duplication unit duplicates the corresponding information in the high-speed information storage medium to a low-speed information storage medium (for example, HDD). The information duplication unit also duplicates, upon receipt of a restoration request from the host, the information from the low-speed information storage medium to the high-speed information storage medium.

### [Citation List]

### [Patent Literature]

[PTL 1] Unexamined Japanese Patent Application Kokai Publication No. 2008-217689
[PTL 2] Unexamined Japanese Patent Application Kokai Publication No. 2012-203864
[PTL 3] Unexamined Japanese Patent Application Kokai Publication No. 2013-073409
[PTL 4] National Patent Publication No. 2012-523594
[PTL 5] Unexamined Japanese Patent Application Kokai Publication No. 2011-090531

### SUMMARY

Accordingly, the present invention provides a disk array device, a disk control device, a solid state drive, a disk control method, and a program therefor, that enable distinction between an UNMAPPED state of a logical block addressing (LBA) in the SSD and abnormality of data.

A disk array device according to one aspect of the present invention includes:
a solid state drive circuit which provides status information indicating whether a physical region constituting a unit to be deleted is allocated to a logical block addressing; and
control circuit which, upon receipt of zero data in which values of data and a trailer are all zero from the solid state drive, transmits the data to a host apparatus in accordance with the status information provided.

A solid state drive according to one aspect of the present invention includes a providing circuit which provides status information indicating whether a physical region constituting a unit to be deleted is mapped in a logical block addressing, in response to a command received from control circuit,
wherein the control circuit transmits, upon receipt of zero data in which values of data and a trailer are all zero from the solid state drive, the data to a host apparatus in accordance with the status information.

A solid state drive according to one aspect of the present invention includes a providing circuit which provides status information indicating whether a physical region constituting a unit to be deleted is mapped in a logical block addressing, in response to a command received from control circuit,
wherein the control circuit transmits, upon receipt of zero data in which values of data and a trailer are all zero from the solid state drive, the data to a host apparatus in accordance with the status information,
the solid state drive being configured to add the status information corresponding to the data when transmitting the data to the control circuit, to thereby provide the status information to the control circuit.

A control device according to one aspect of the present invention includes a circuit which transmits, upon receipt of zero data in which values of data and a trailer are all zero from the solid state drive, the data to a host apparatus in accordance with status information indicating whether a physical region constituting a unit to be deleted is mapped in a logical block addressing and which is provided from the solid state drive.

A disk control method according to one aspect of the present invention includes causing a computer to transmit, upon receipt of zero data in which values of data and a trailer are all zero from the solid state drive, the data to a host apparatus in accordance with status information indicating whether a physical region constituting a unit to be deleted is mapped in a logical block addressing and which is provided from the solid state drive.

A computer-readable non-transitory recording medium according to one aspect of the present invention records a program configured to cause a computer to transmit, upon receipt of zero data in which values of data and a trailer are all zero from the solid state drive, the data to a host apparatus in accordance with status information indicating whether a physical region constituting a unit to be deleted is mapped in a logical block addressing and which is provided from the solid state drive.

### BRIEF DESCRIPTION OF THE DRAWINGS

Exemplary features and advantages of the present invention will become apparent from the following detailed description when taken with the accompanying drawings in which:
Fig. 1 is a diagram showing an image of physical extent allocation according to a related art;
Fig. 2 is a diagram showing an image of execution of an UNMAP command by a storage device according to the related art;
Fig. 3 is a diagram showing an image of updating of a MAP status management table in a SSD according to the related art;
Fig. 4 is a diagram showing another image of updating of the MAP status management table in the SSD according to the related art;
Fig. 5 is a diagram showing an image of addition of a trailer in a disk array device according to the related art;
Fig. 6 is a diagram showing an image of returning of zero data and a zero trailer from the SSD according to the related art;
Fig. 7 is a block diagram showing a configuration of a disk array device according to a first exemplary embodiment of the present invention;
Fig. 8 is a block diagram showing a configuration of a SSD according to the first exemplary embodiment;
Fig. 9 is a diagram showing an example of the structure of a MAP status management table according to the first exemplary embodiment;
Fig. 10 is a diagram showing an example of the structure of an allocation management table according to the first exemplary embodiment;
Fig. 11 is a block diagram showing a hardware configuration of a computer that realizes the disk array device according to the first exemplary embodiment;
Fig. 12 is a diagram showing a specific example of the allocation management table according to the first exemplary embodiment;
Fig. 13 is a diagram showing a specific example of the MAP status management table according to the first exemplary embodiment;
Fig. 14 is a flowchart showing an operation of the disk array device according to the first exemplary embodiment;
Fig. 15 is a diagram showing another specific example of the allocation management table according to the first exemplary embodiment;
Fig. 16 is a diagram showing another specific example of the MAP status management table according to the first exemplary embodiment;
Fig. 17 is a flowchart showing another operation of the disk array device according to the first exemplary embodiment;
Fig. 18 is a flowchart showing still another operation of the disk array device according to the first exemplary embodiment;
Fig. 19 is a diagram showing still another specific example of the allocation management table according to the first exemplary embodiment;
Fig. 20 is a diagram showing still another specific example of the MAP status management table according to the first exemplary embodiment; and
Fig. 21 is a block diagram showing a configuration of a disk array device according to a second exemplary embodiment of the present invention.

### EXEMPLARY EMBODIMENTS

Hereafter, exemplary embodiments of the present invention will be described in details with referenced to the drawings. In the drawings and the description of the exemplary embodiments, the same components will be given the same numeral, and the description thereof will not be repeated.

### <<< First Exemplary Embodiment >>>

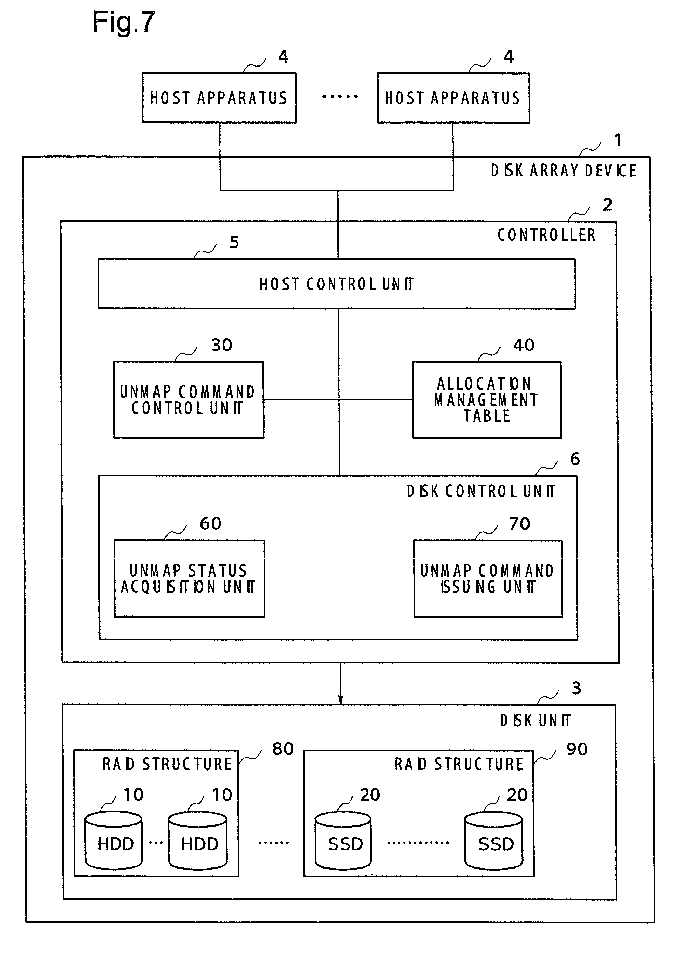

Fig. 7 is a block diagram showing a configuration of an information processing system including a disk array device 1 and a host apparatus 4, according to a first exemplary embodiment of the present invention.

As shown in Fig. 7, the disk array device 1 according to the first exemplary embodiment of the present invention includes a controller 2 and a disk unit 3.

### === Disk Unit 3 ===

The disk unit 3 includes a plurality of HDDs 10 and SSDs 20. For example, the disk unit 3 includes an arbitrary number of RAID structures 80 and an arbitrary number of RAID structures 90 as shown in Fig. 7. Each of the RAID structures 80 includes an arbitrary number of HDDs 10, and each of the RAID structures 90 includes an arbitrary number of SSDs 20.

### === SSD 20 ===

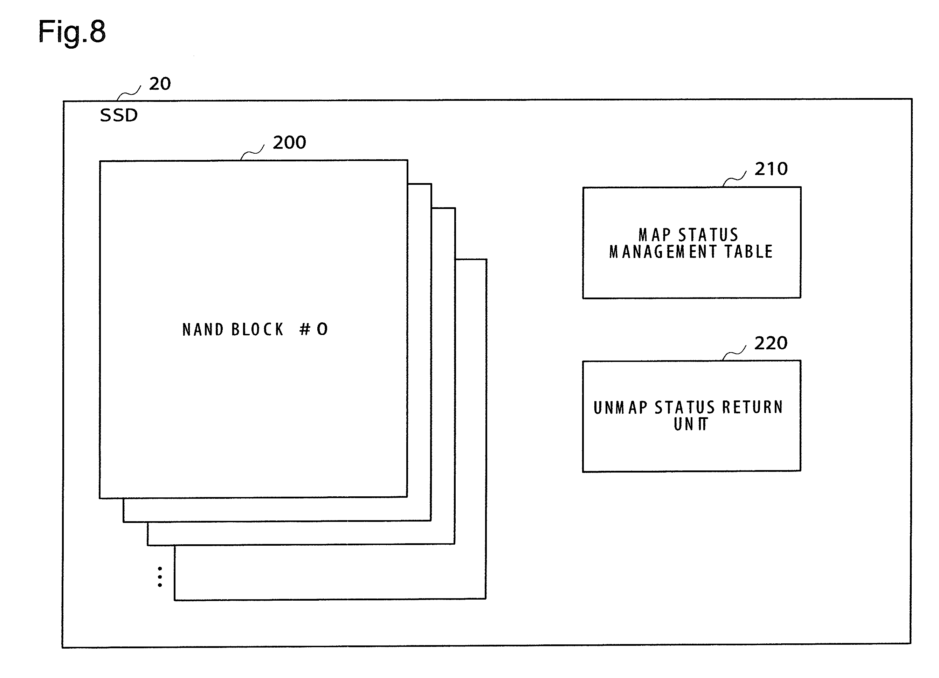

Fig. 8 is a block diagram showing a configuration of the SSD 20. As shown in Fig. 8, the SSD 20 includes a plurality of NAND blocks (physical regions constituting units to be deleted) 200 for storing data, a MAP status management table 210, and an UNMAP status return unit 220. Here, symbols "#" in the drawings related to this exemplary embodiment indicate that the figures on the right of "#" represent the number of the component (in Fig. 8, the number of the NAND block 200).

### === MAP Status Management Table 210 ===

The MAP status management table 210 retains information indicating the NAND block 200 in which data corresponding to each logical block addressing (hereinafter, LBA) of the SSD 20 is stored, or information that the data is not stored.

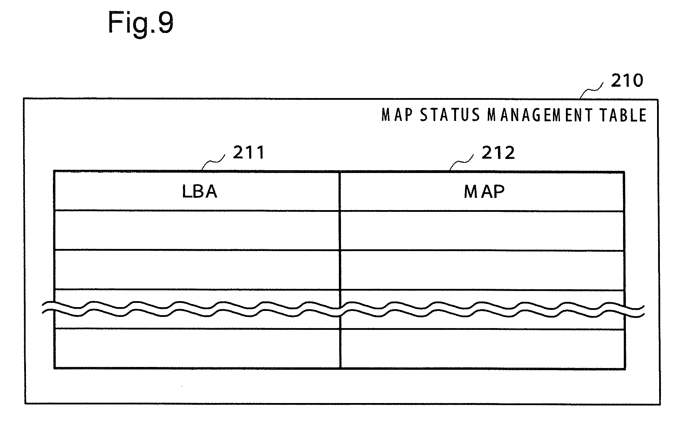

Fig. 9 is a diagram showing an example of the structure of the MAP status management table 210. As shown in Fig. 9, the MAP status management table 210 includes records included the LBA 211 and a MAP 212. The LBA 211 represents the values of the LBA. The MAP 212 represents information indicating the number of the NAND block 200 allocated to the LBA 211, or information ("-") that the data is not stored (UNMAPPED), in other words that the NAND block 200 is not allocated to the LBA 211.

When the controller 2 executes a write command on one of the LBAs 211 of the SSD 20, the SSD 20 stores the write data corresponding to the write command, in the NAND block 200 to which data is not allocated. In other words, the SSD 20 allocates the NAND block 200 to the LBA 211. At the same time, the SSD 20 releases the NAND block 200 in which data was originally stored, allocated to the LBA 211 before the writing is made. At this point, the SSD 20 stores, in the MAP status management table 210, the MAP 212 indicating the NAND block 200 in which the write data has been stored and corresponding to the LBA 211 to which the write command has been designated. Regarding the LBA 211 in which data is not stored, information that data is not yet allocated is stored in the MAP 212, in the MAP status management table 210.

### === UNMAP Status Return Unit 220 ===

The UNMAP status return unit 220 acquires, upon receipt of a status acquisition command from the controller 2, status information corresponding to the region designated by the status acquisition command from the MAP status management table 210, and transmits the status information to the controller 2. More specifically, the UNMAP status return unit 220 transmits MAPPED when the MAP 212 corresponding to the LBA 211 designated by the status acquisition command is a number of the NAND block. In contrast, when the MAP 212 corresponding to the LBA 211 designated by the status acquisition command is "-", the UNMAP status return unit 220 transmits UNMAPPED.

When the UNMAP status return unit 220 receives a read command from the controller 2, the UNMAP status return unit 220 may add status information corresponding to the region designated by the read command to the read data, and transmit such read data. In such a case, the UNMAP status acquisition unit 60 may acquire the status information included in the read data.

### === Controller 2 ===

The controller 2 includes a host control unit 5, a disk control unit 6, an UNMAP command control unit 30, and an allocation management table 40.

### === Disk Control Unit 6 ===

The disk control unit 6 is connected to the disk unit 3, and reads and writes data from and in the HDD 10 and the SSD 20. The disk control unit 6 includes the UNMAP status acquisition unit 60 and an UNMAP command issuing unit 70.

### === UNMAP Status Acquisition Unit 60 ===

The UNMAP status acquisition unit 60 transmits the status acquisition command to the SSD 20 of the disk unit 3, and acquires the UNMAP state.

### === UNMAP Command Issuing Unit 70 ===

The UNMAP command issuing unit 70 transmits a second UNMAP command, corresponding to the first UNMAP command received by the disk array device 1 from the host apparatus 4, to the SSD 20 of the disk unit 3. The second UNMAP command will be subsequently described.

### === Allocation Management Table 40 ===

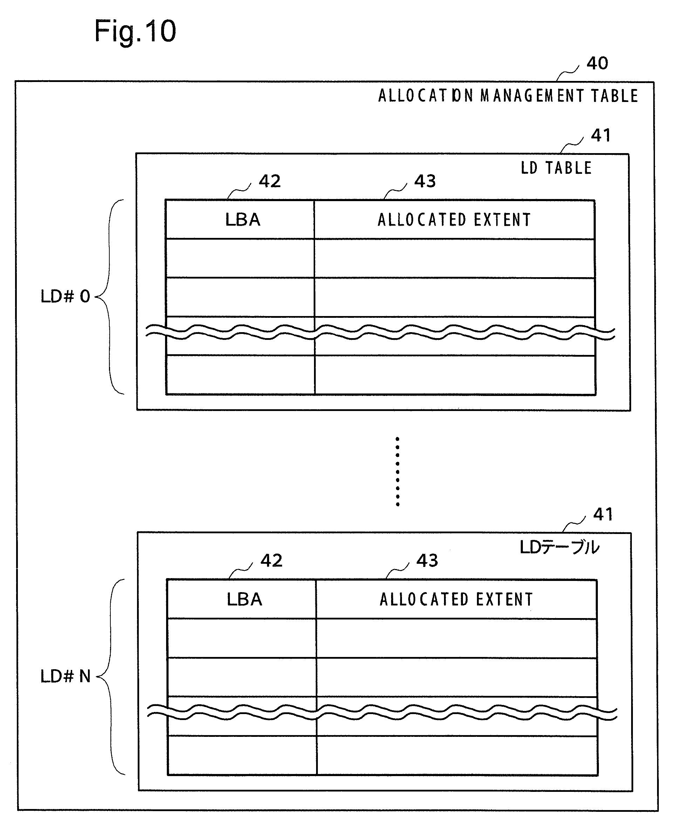

Fig. 10 is a diagram showing an example of the structure of the allocation management table 40.

As shown in Fig. 10, the allocation management table 40 includes LD tables 41 for the respective LDs. Each of the LD tables 41 includes allocated extents 43 indicating the extent allocated to the LBA with respect to each of the LBAs 42 for identifying the LBA.

### === Host Control Unit 5 ===

The host control unit 5 is connected to one or a plurality of host apparatuses 4, to transmit and receive data to and from the host apparatus 4.

The host control unit 5 receives the write command, read command, and the UNMAP command from the host apparatus 4.

When the host apparatus 4 executes data write on one of the LDs, the host control unit 5 refers to the allocation management table 40, to decide whether the LBA designated by the write command is allocated with an extent. When the extent is allocated (MAPPED), the host control unit 5 overwrites the data on the data originally stored in the extent.

When the extent is not allocated (UNMAPPED), the host control unit 5 stores the write data in an unallocated extent in the HDD 10 and the SSD 20 to which the LD corresponding to the write command belongs. Then the host control unit 5 stores the number of the allocated extent 43 indicating the extent in which the write data is stored, in the LD table 41.

When the host apparatus 4 issues a read command, the host control unit 5 refers to the allocation management table 40, to read the data from the disk unit 3 according to the read command.

The host control unit 5 reads the data and the trailer from the SSD 20, and acquires the status information from the SSD 20 through the UNMAP status acquisition unit 60, when the data and the trailer that have been read are 0. Here, the status information serves to indicate whether the NAND block 200 is allocated (true) in the LBA corresponding to the read command or not (false). In other words, the status information indicates whether the data designated by the read command is allocated to any of the regions of the SSD 20. The host control unit 5 executes a trailer error processing when the status information is true. When the status information is false, the host control unit 5 returns (transmits) zero data to the host apparatus 4.

When the host apparatus 4 issues a first UNMAP command, the host control unit 5 divides the first UNMAP command into portions corresponding to each extent, and processes each of the divided first UNMAP commands through the UNMAP command control unit 30. Hereafter, the divided first UNMAP command will be referred to as divided UNMAP command.

### === UNMAP Command Control Unit 30 ===

The UNMAP command control unit 30 decides whether the processing range of the divided UNMAP command (size of the SSD 20 subjected to the UNMAP processing) matches one extent. When the size to be processed matches one extent, the UNMAP command control unit 30 releases the extent from allocation. More specifically, the UNMAP command control unit 30 turns the allocated extent 43 corresponding to the LBA 42 designated by the divided UNMAP command to a state where the extent is not allocated (for example, "-"), in the allocation management table 40.

When the processing range is smaller than the range corresponding to one extent, and the divided UNMAP commands are issued to the RAID structure 90, the UNMAP command control unit 30 issues a second UNMAP command UNMAP to the SSD 20 through the command issuing unit 70. The second UNMAP command is a conversion of the divided UNMAP command to a format that can be interpreted by the SSD 20.

Although the configuration of the exemplary embodiment has thus far been described in details, the portions of the disk array device 1 other than those described above are well known to persons skilled in the art, and not directly related to the present invention, and therefore detailed description of such portions will be omitted.

Each of the components in the controller 2 may be realized by a circuit. The circuit may be configured for each hardware, or set up as a module included in a microchip, or a computer. The circuit may be, for example, a large scale integration (LSI) or a programmable gate array (PGA), and the LSI and the PGA may be constituted as a single-chip or multi-chip. Further, the circuit may be a server, or a combination of a server and a local device. Those components may be divided into functional blocks realized by a computer.

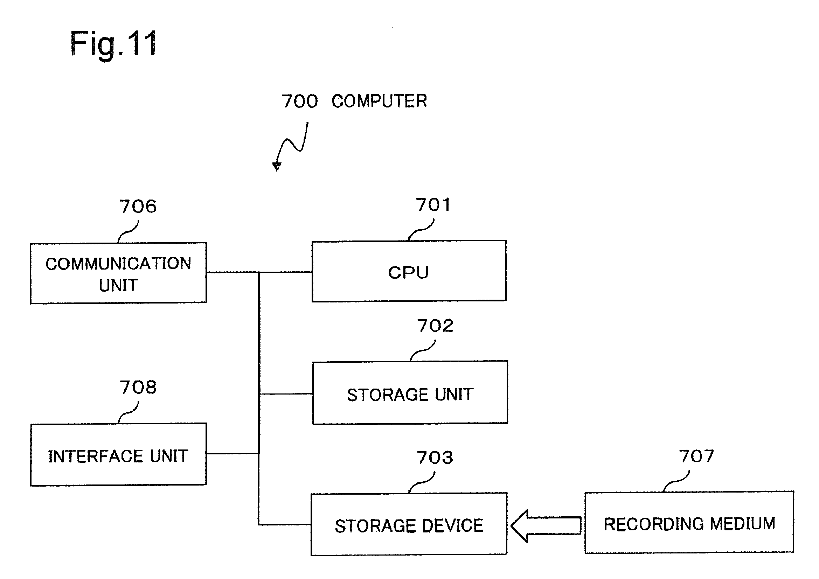

Fig. 11 is a block diagram showing a hardware configuration of a computer 700 that realizes the controller 2 according to this exemplary embodiment.

As shown in Fig. 11, the computer 700 includes a central processing unit (CPU) 701, a storage unit 702, a storage device 703, a communication unit 706, and an interface unit 708. The computer 700 also includes an external recording medium (or storage medium) 707. The recording medium 707 may be, for example, a non-volatile recording medium (non-transitory recording medium) that non-transitorily stores information. Alternatively, the recording medium 707 may be a transitory recording medium that retains information in a form of a signal.

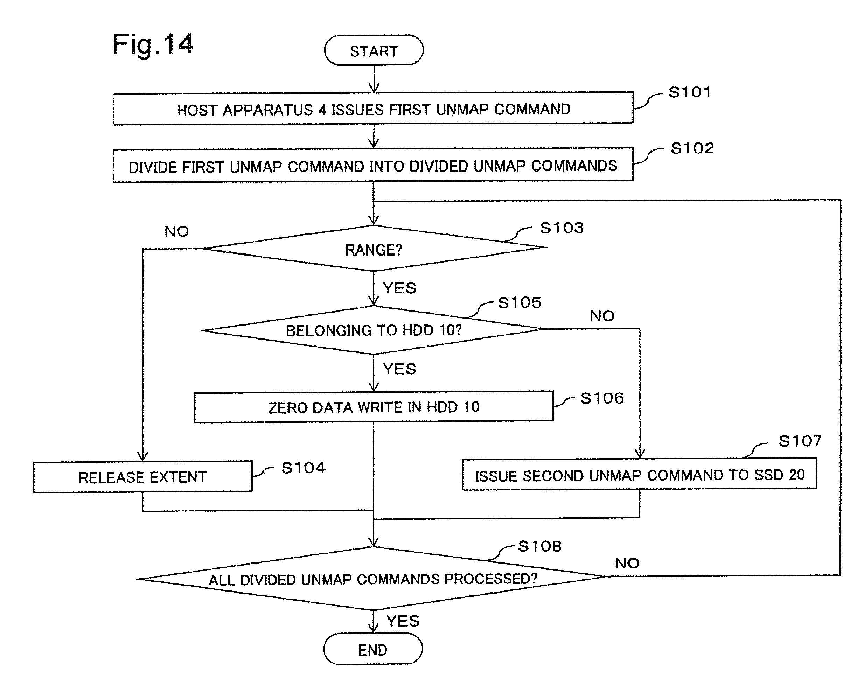

The CPU 701 activates a non-illustrated operating system and controls the overall operation of the computer 700. For example, the CPU 701 reads a program or data from the recording medium 707 attached to the storage device 703, and writes the program or the data that has been read in the storage unit 702. Here, the program may be a program for causing the computer 700 to execute, for example, the processes according to flowcharts of Fig. 14, Fig. 17, and Fig. 18 to be subsequently described.

Thus, the CPU 701 acts as the UNMAP command control unit 30, the host control unit 5, and the disk control unit 6 shown in Fig. 7 to execute various processes, in accordance with the program read as above, or on the basis of the data read as above.

The CPU 701 may download the program and the related data from a non-illustrated external computer connected to a non-illustrated communication network, into the storage unit 702.

The storage unit 702 stores the program and the related data stated above. The storage unit 702 may store the allocation management table 40. The storage unit 702 may be included in the UNMAP command control unit 30, the host control unit 5, and the disk control unit 6 as part thereof.

The storage device 703 may be, for example, an optical disk, a flexible disk, a magneto-optical disk, or an external hard disk semiconductor memory. The storage device 703 may also be a semiconductor storage device such as a flash memory. The storage device 703 (recording medium 707) computer-readably stores the program. The storage device 703 may also store the data related to the program. The storage device 703 may store the allocation management table 40. The storage device 703 may be included in the UNMAP command control unit 30, the host control unit 5, and the disk control unit 6 as part thereof.

The communication unit 706 realizes interface with the host apparatus 4. The communication unit 706 may be included in the host control unit 5 as part thereof.

The interface unit 708 provides interface with the disk unit 3. The interface unit 708 may be included in the disk control unit 6 as part thereof.

As described above, the functional components of the controller 2 shown in Fig. 7 may be realized by the computer 700 including the hardware configuration shown in Fig. 11. However, the hardware configuration of the functional blocks of the computer 700 is not limited to the foregoing example. For example, the computer 700 may be realized as a physically unified single unit, or a plurality of devices physically separated and wiredly or wirelessly connected to each other.

When the recording medium 707 on which the codes of the mentioned program is recorded is provided to the computer 700, the CPU 701 may read out the codes of the program stored in the recording medium 707 and execute the program. Alternatively, the CPU 701 may store the codes or the program in the recording medium 707 in one or both of the storage unit 702 and the storage device 703. Thus, this exemplary embodiment encompasses an exemplary embodiment of the recording medium 707 configured to store, transitorily or non-transitorily, the program (software) to be executed by the computer 700 (CPU 701). The storage medium that non-transitorily stores information is also called as non-volatile storage medium.

The above is the description of the hardware configuration of the computer 700 embodying the controller 2 according to this exemplary embodiment.

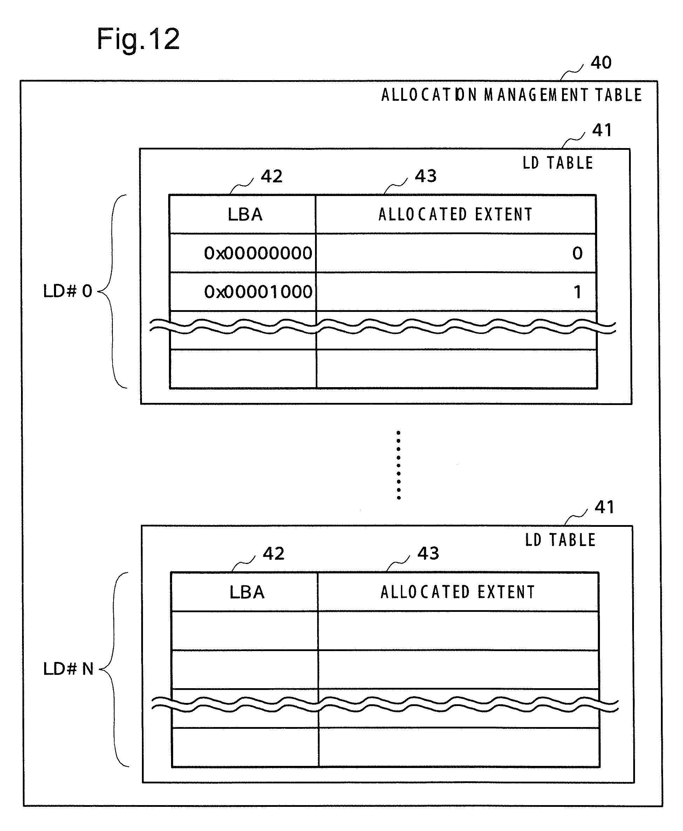

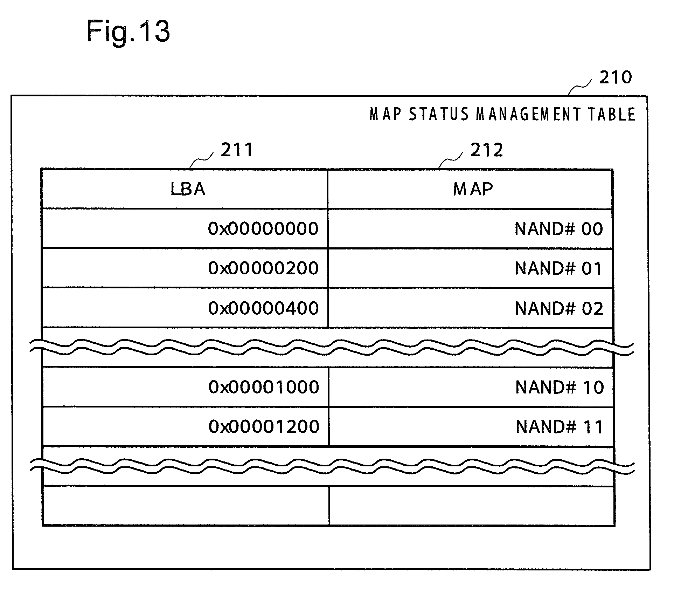

Hereunder, the operation of the disk array device 1 according to this exemplary embodiment shown in Fig. 7 will be described in details, with reference to the following drawings. Fig. 14, Fig. 17, and Fig. 18 are flowcharts showing the operation of the disk array device 1 according to this exemplary embodiment. Fig. 12, Fig. 15, and Fig. 19 are diagrams showing specific examples of the allocation management table 40. Fig. 13, Fig. 16, and Fig. 20 are diagrams showing specific examples of the MAP status management table 210.

The description will be given on the basis of the following assumption.

LD number 0 belongs to the RAID structure 90 included the SSDs 20. In the initial state of the data of the LD number 0, the LBA of "0x00000000" in the column of LBA 42 is allocated to the extent being the number "0" in the column of allocated extent 43, as shown in the allocation management table 40 of Fig. 12. Likewise, the LBA of "0x00001000" in the column of LBA 42 is allocated to the extent being the number "1" in the column of allocated extent 43, in the initial state.

The data being the number "0" in the column of allocated extent 43 sequentially corresponds to the LBA from "0x00000000" in the column of LBA 211 of the SSD 20, as shown in the MAP status management table 210 of Fig. 13. Such data is sequentially stored in the NAND block 200 from the number "00" in the column of MAP 212. The data being the number "1" in the column of allocated extent 43 sequentially corresponds to the LBA from "0x00001000" in the column of LBA 211 of the SSD 20, and such data is sequentially stored in the NAND block 200 from the number "10" in the column of MAP 212.

It is to be noted that the LD numbers, the values of the LBA 42, the numbers of the allocated extent 43, the unit of the extent, the values of the LBA 211 of the SSD 20, the numbers of the NAND block 200, and the unit of the NAND block 200 are not limited to the foregoing examples.

First, an operation performed when the host apparatus 4 issues the UNMAP command to one of the LDs will be described, with reference to the flowchart of Fig. 14.

The host apparatus 4 issues the first UNMAP command to the LD (step S101).

The host control unit 5 in the controller 2 of the disk array device 1 divides the first UNMAP command into the divided UNMAP commands (step S102).

The UNMAP command control unit 30 decides whether the processing size of the divided UNMAP command matches the range corresponding to one extent or is smaller than the range corresponding to one extent (step S103).

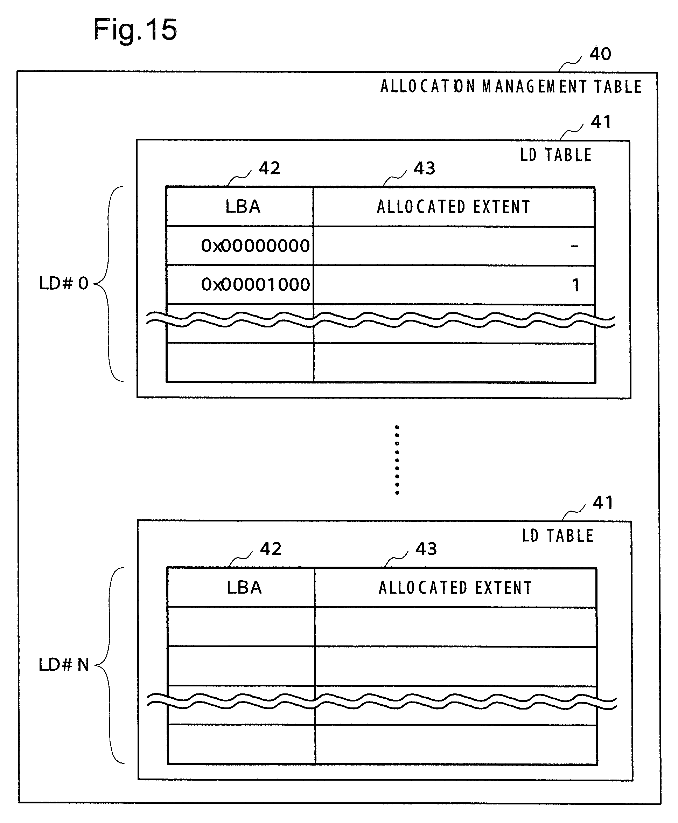

When the processing range of the divided UNMAP command matches the range corresponding to one extent (YES at step S103), the UNMAP command control unit 30 releases the extent (step S104). This extent is the one corresponding to the divided UNMAP command, and allocated to the LBA in the column of LBA 42 of the LD table 41 in the allocation management table 40. More specifically, the UNMAP command control unit 30 sets the allocated extent 43 corresponding to "0x00000000" of LBA 42 to "-" (indicating that the extent is not allocated), as shown in Fig. 15.

When the processing range of the divided UNMAP command is smaller than the range corresponding to one extent (NO at step S103), the UNMAP command control unit 30 decides which of the HDD 10 and the SSD 20 the corresponding LBA 42 belongs to (step S105).

When the corresponding LBA 42 belongs to the HDD 10 (YES at step S105), the disk control unit 6 performs zero data write on the corresponding range in the HDD 10 (step S106).

When the corresponding LBA 42 belongs to the SSD 20 (NO at step S105), the UNMAP command control unit 30 issues the UNMAP command to the SSD 20, through the UNMAP command issuing unit 70 (step S107).

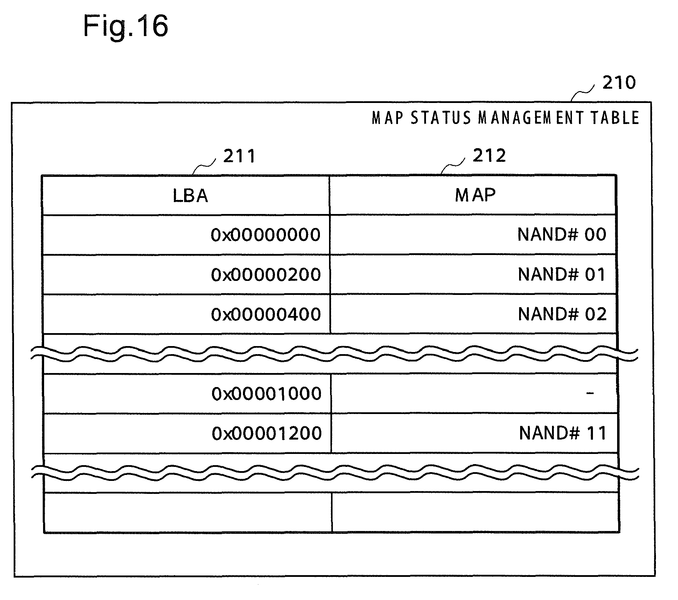

When the UNMAP command is issued, the SSD 20 releases the NAND block 200 storing the data of LBA 211 corresponding to the range designated by the UNMAP command in the MAP status management table 210, from the MAP 212. More specifically, the SSD 20 sets the MAP 212 corresponding to "0x00001000" in LBA 211 to "-", as shown in Fig. 16.

Then the UNMAP command control unit 30 decides whether all the divided UNMAP commands have been processed (step S108). In the case where all the divided UNMAP commands have been processed (YES at step S108), the operation is finished. In the case where any of the divided UNMAP commands remains unprocessed (NO at step S108), the operation returns to step S103.

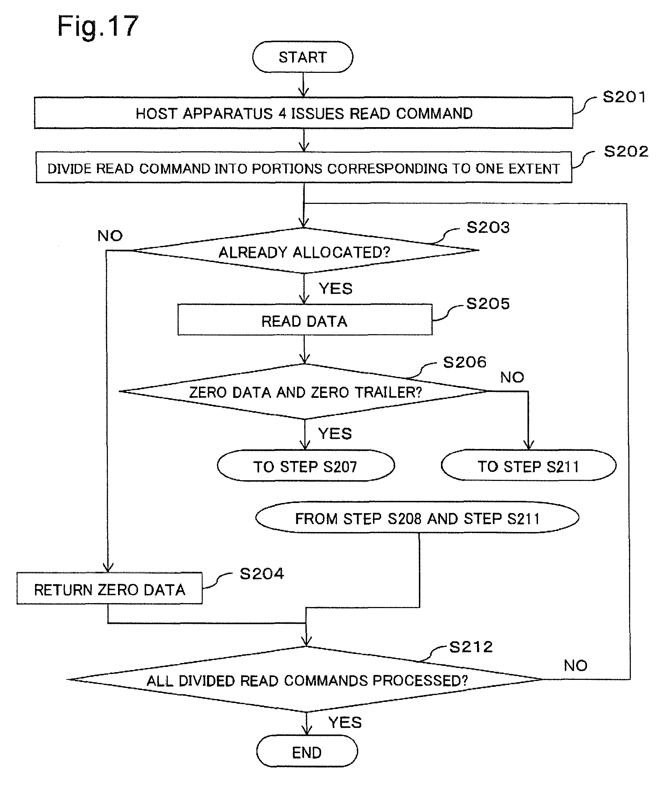

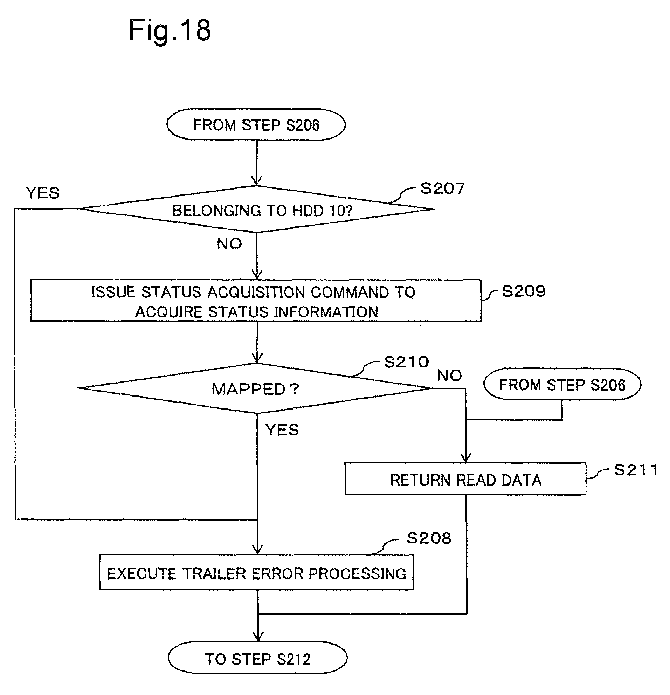

Second, an operation performed when the host apparatus 4 issues the read command to the LD will be described, with reference to the flowcharts of Fig. 17 and Fig. 18.

The host apparatus 4 issues the read command to the LD (step S201).

The host control unit 5 in the controller 2 of the disk array device 1 divides the read command into portions each corresponding to one extent (step S202). Hereafter, the read command divided into the size of one extent will be referred to as divided read command.

The host control unit 5 decides, with respect to the divided read command, whether the extent is allocated to the corresponding LBA in the column of LBA 42 in the allocation management table 40 (step S203).

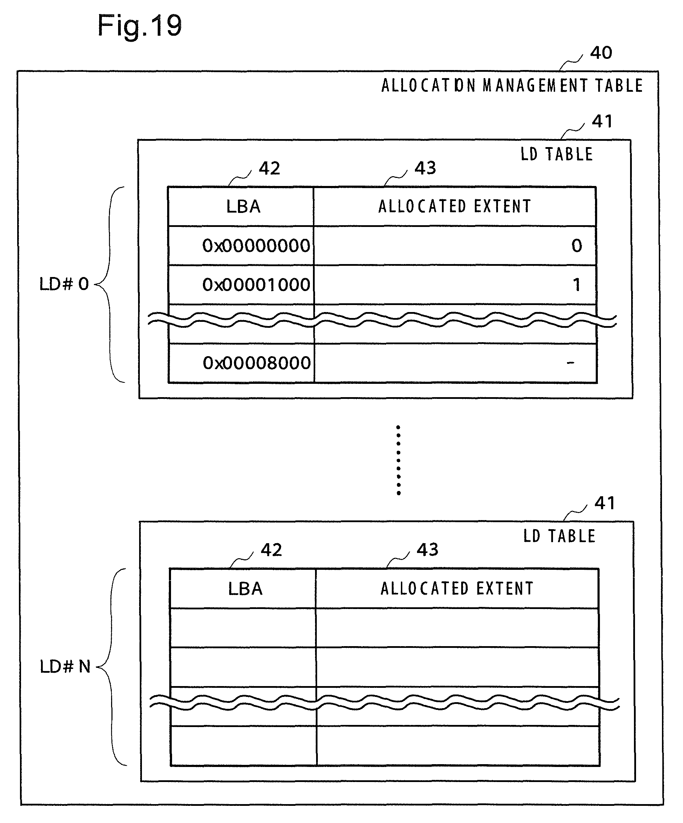

When the extent is not allocated (NO at step S203), the host control unit 5 returns zero data to the host apparatus 4 (step S204). Then the operation proceeds to step S212. Here, "the case where the extent is not allocated" corresponds, for example, to the case where the allocated extent 43 corresponding to "0x00008000" in the column of LBA 42 is "-", as shown in Fig. 19.

When the extent is allocated (YES at step S203), the host control unit 5 reads the data from the HDD 10 or SSD 20, through the disk control unit 6 (step S205). Here, "the case where the extent is allocated" corresponds, for example, to the case where the allocated extents 43 corresponding to "0x00000000" and "0x00001000" in the column of LBA 42 are "0" and "1" respectively, as shown in Fig. 19.

The host control unit 5 then decides whether the data that has been read is zero data and zero trailer (step S206).

When the data is not "zero data and zero trailer" (NO at step S206), the host control unit 5 returns the data that has been read to the host apparatus 4 (step S211).

When the data is zero data and zero trailer (YES at step S206), the host control unit 5 decides which of the HDD 10 and the SSD 20 the corresponding LBA 42 belongs to (step S207).

When the corresponding LBA 42 belongs to the HDD 10 (YES at step S207), the host control unit 5 executes the trailer error processing (step S208).

When the corresponding LBA 42 belongs to the SSD 20 (NO at step S207), the UNMAP status acquisition unit 60 issues the status acquisition command to the SSD 20, thereby acquiring status information (step S209).

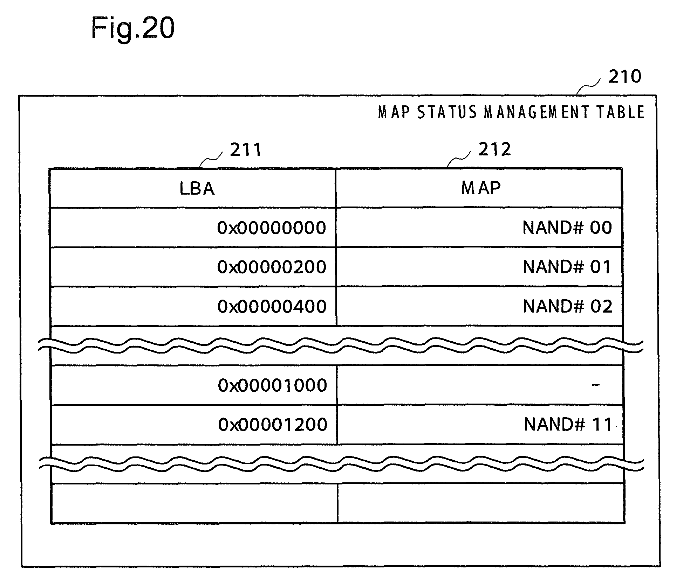

Here, the UNMAP status return unit 220 of the SSD 20 confirms, upon receipt of the status acquisition command at step S209, whether the LBA designated by the status acquisition command is allocated with the NAND block 200. More specifically, the UNMAP status return unit 220 refers to the MAP status management table 210 to check the MAP 212 corresponding to the LBA 211 in question. The UNMAP status return unit 220 then returns, as status information, MAPPED when the MAP 212 represents a NAND block number, and UNMAPPED when the MAP 212 is "-". For example, "the case where the LBA is allocated with the NAND block 200" corresponds to the case where the MAP 212 corresponding to "0x00000000" in the LBA 211 is "NAND#00" as shown in Fig. 20. In contrast, "the case where the LBA is not allocated with the NAND block 200" corresponds to the case where the MAP 212 corresponding to "0x00001000" in the LBA 211 is "-" as shown in Fig. 20.

Then the host control unit 5 checks the status information acquired by the UNMAP status acquisition unit 60 (step S210).

When the status information is MAPPED (YES at step S210), the host control unit 5 executes the trailer error processing (step S208). Then the operation proceeds to step S212.

When the status information is UNMAPPED (NO at step S210), the host control unit 5 returns the data read from the SSD 20 (i.e., zero data) to the host apparatus 4 (step S211). Then the operation proceeds to step S212.

The host control unit 5 then decides whether all the divided read commands have been processed (step S212). In the case where all the divided read commands have been processed (YES at step S212), the operation is finished. In the case where any of the divided read commands remains unprocessed (NO at step S212), the operation returns to step S203.

One of the advantageous effects of the foregoing exemplary embodiment is that distinction between the UNMAPPED state of the LBA in the SSD 20 and abnormality of data can be made.

The mentioned advantage is attained from the following configuration. First, the UNMAP status return unit 220 of the SSD 20 provides the status information indicating whether the LBA is allocated with the NAND block 200. Second, the host control unit 5 in the controller 2 transmits, upon receipt of the zero data in which the values of the data and trailer are all zero from the SSD 20, the data to the host apparatus 4 in accordance with the status information provided.

### <<< Second Exemplary Embodiment >>>

Hereunder, a second exemplary embodiment of the present invention will be described in details with reference to the drawings. The description of the same configurations as those of the first exemplary embodiment may be omitted, where the clarity of the description can be secured.

The second exemplary embodiment of the present invention represents a minimum necessary configuration for solving the problem.

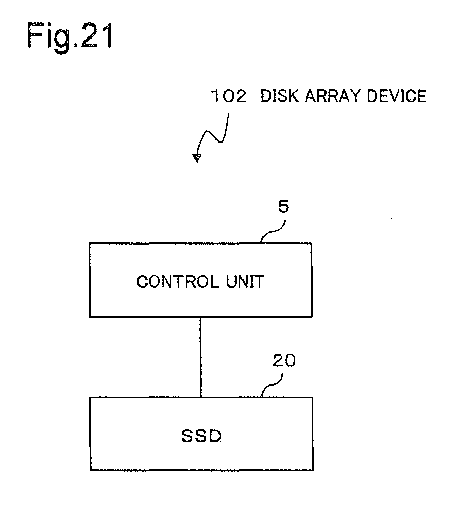

Fig. 21 is a block diagram showing a configuration of a disk array device 102 according to the second exemplary embodiment of the present invention.

As shown in Fig. 21, the disk array device 102 according to this exemplary embodiment includes the host control unit 5 and the SSD 20.

### === SSD 20 ===

The SSD 20 may be the same as the SSD 20 shown in Fig. 8. The SSD 20 provides the status information indicating whether the LBA is allocated with the NAND block 200.

### === Host Control Unit 5 ===

The host control unit 5 transmits, upon receipt of the zero data in which the values of the data and trailer are all zero from the SSD 20, the data to the non-illustrated host apparatus in accordance with the status information provided.

The host control unit 5 shown in Fig. 21 may be realized by the computer 700 shown in Fig. 11, like the host control unit 5 shown in Fig. 7.

This exemplary embodiment configured as above provides the same advantageous effects as those provided by the first exemplary embodiment.

The components described with reference to the foregoing exemplary embodiments do not necessarily have to be individually independent. For example, a plurality of arbitrarily selected components may be realized as a single module. In addition, any one of the components may be constituted of a plurality of modules. Any one of the components may be another one of the components. Further, a part of any one of the components may overlap a part of any another one of the components.

The components according to the foregoing exemplary embodiments and the module that realizes the components may be realized in the form of hardware, if need be and if possible. In addition, the components and the module that realizes the components may be realized by a computer and a program. Further, the components and the module that realizes the components may be realized by a mixture of a hardware module, the computer, and the program.

The program may be recorded on a computer-readable non-transitory recording medium such as a magnetic disk or a semiconductor memory, and provided to the computer. The program may be read by the computer from the non-transitory recording medium, for example when the computer is activated. The program thus read controls the operation of the computer, so as to cause the computer to act as the components described in the foregoing exemplary embodiments.

Although a plurality of steps of the operation are sequentially described in the form of flowcharts in the exemplary embodiments, such sequence is not intended to limit the order of the plurality of steps of the operation. Accordingly, the order of the plurality of steps of the operation may be modified unless a disadvantage is incurred, when carrying out the exemplary embodiments.

Further, the plurality of steps of the operation do not have to be performed at different timings from each other, in the exemplary embodiments. For example, a step may be performed while another step is in action. In addition, a step and another step may be performed partially or entirely at the same time.

Further, although the exemplary embodiments refer to the cases where an action triggers another action, such description is not intended to limit the relation between those actions. Accordingly, the relation among the plurality of actions may be modified unless a disadvantage is incurred, when carrying out the exemplary embodiments. In addition, the descriptions of the specific actions of the components are not intended to limit the function of the components. Therefore, the specific actions of the components may be modified unless a disadvantage is incurred in function, performance, or characteristics, when carrying out the exemplary embodiments.

A solid state drive according to one aspect of the present invention includes a providing circuit which provides status information indicating whether a physical region constituting a unit to be deleted is mapped in a logical block addressing, in response to a command received from control circuit,
wherein the control circuit transmits, upon receipt of zero data in which values of data and a trailer are all zero from the solid state drive, the data to a host apparatus in accordance with the status information.

A solid state drive according to one aspect of the present invention includes a providing circuit which provides status information indicating whether a physical region constituting a unit to be deleted is mapped in a logical block addressing, in response to a command received from control circuit,
wherein the control circuit transmits, upon receipt of zero data in which values of data and a trailer are all zero from the solid state drive, the data to a host apparatus in accordance with the status information,
the solid state drive being configured to add the status information corresponding to the data when transmitting the data to the control circuit, to thereby provide the status information to the control circuit.

A control device according to one aspect of the present invention includes a circuit which transmits, upon receipt of zero data in which values of data and a trailer are all zero from the solid state drive, the data to a host apparatus in accordance with status information indicating whether a physical region constituting a unit to be deleted is mapped in a logical block addressing and which is provided from the solid state drive.

The foregoing technique according to PTL 4 has the following drawback. The disk array device including the SSD may fail to properly distinguish, with respect to a given NAND block in the SSD, whether the data is not stored or the data is abnormal.

The mentioned drawback will be described in further details hereunder.

The SSD checks, with respect to each LBA, in which of the NAND blocks the data is stored and whether the data is not stored in any of the NAND blocks, on the basis of the MAP status management table. The LBA in which the data is stored in one of the NAND blocks will be referred to as "MAPPED LBA". The LBA in which the data is not stored in the NAND block will be referred to as "UNMAPPED LBA".

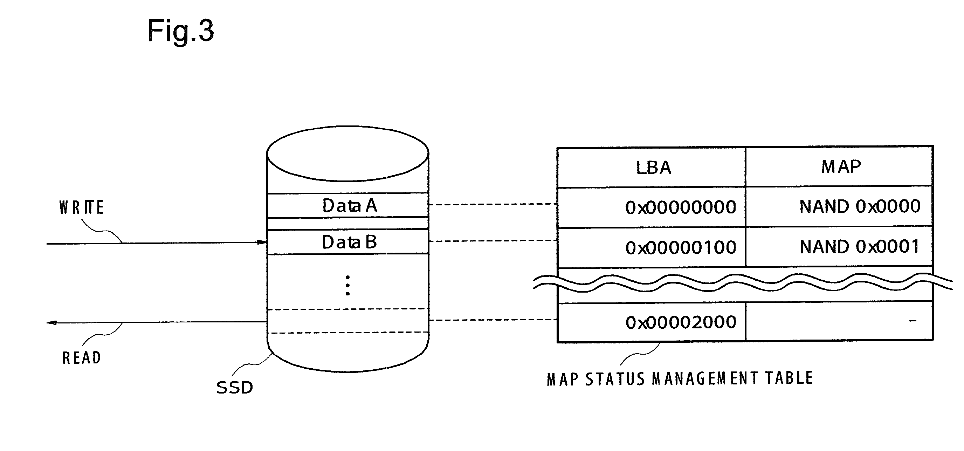

The SSD returns the "0" data when the read command is issued to the UNMAPPED LBA and allocates the NAND block when the write command is issued, and updates the MAP status management table. Fig. 3 is a diagram showing the image of the updating of the MAP status management table in the SSD performed as above.

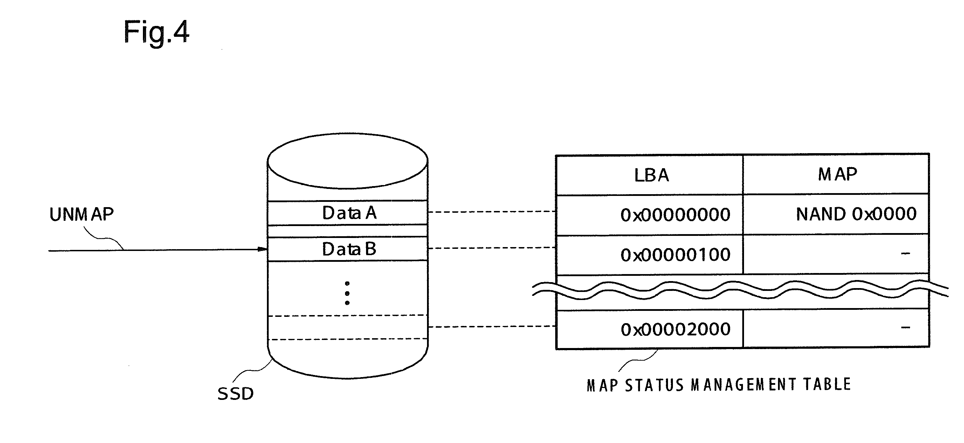

In addition, the SSD supports small-sized UNMAP as standard function. The SSD updates, upon receipt of the UNMAP command, the corresponding LBA in the MAP status management table to UNMAPPED. The SSD then utilizes the NAND block thus far allocated to the LBA, as region for another data. Fig. 4 is a diagram showing the image of the updating of the MAP status management table in the SSD performed as above.

Thus, the SSD does not execute the zero data write to the NAND block when the UNMAP command is issued. The disk array device according to PTL 4 issues the UNMAP command to the SSD instead of performing the zero data write, when the host apparatus issues the UNMAP command with designation of a range smaller than the range corresponding to one extent. Such an arrangement enables reduction of the number of times of data writing in the SSD.

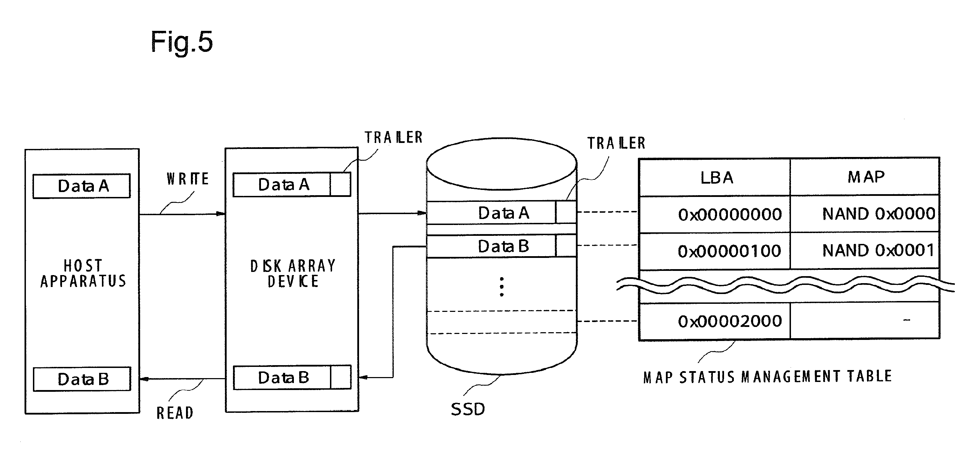

However, when storing data in storage devices such as the HDD or SSD, the disk array device normally writes the data adding a check code called trailer, for improved reliability of the data. Fig. 5 is a diagram showing the image of the addition of the trailer in the disk array device.

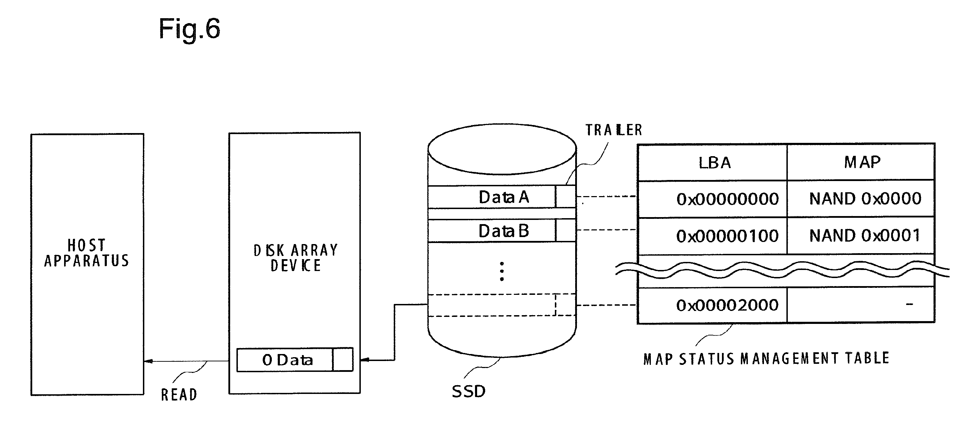

In this case, when the disk array device reads from the region in the SSD to which the UNMAP command has been issued, the SSD returns the data being the value of "0" (zero data) and the trailer being the value of "0" (zero trailer). Therefore, the disk array device decides as trailer error. Fig. 6 is a diagram showing the image of the returning of the zero data and zero trailer from the SSD.

As remedy for such a problem, the disk array device may be additionally configured to decide, when the zero data and zero trailer are returned from the SSD upon reading the region therein, that the region is the UNMAPPED region. In this case, however, when the SSD returns the zero data and zero trailer owing to malfunction despite the read region in the SSD being MAPPED, the disk array device decides that the region is UNMAPPED. Thus, the disk array device may fail to detect the malfunction of the SSD.

In other words, the technique according to PTL 4 has the drawback in that the disk array device may fail to properly distinguish, with respect to zero data and zero trailer returned from the SSD in response to the read command issued to the SSD, whether the data indicates the UNMAPPED region or the data is abnormal.

Although the present invention has been described with reference to the exemplary embodiments, the present invention is in no way limited to the foregoing exemplary embodiments. Various modifications obvious to those skilled in the art may be made to the configurations and specific details of the present invention, within the scope of the present invention.

### [Reference signs List]

- 1: disk array device
- 2: controller
- 3: disk unit
- 4: host apparatus
- 5: host control unit
- 6: disk control unit
- 10: HDD
- 20: SSD
- 30: UNMAP command control unit
- 40: management table
- 41: LD table
- 42: LBA
- 43: allocated extent
- 60: UNMAP status acquisition unit
- 70: UNMAP command issuing unit
- 80: RAID structure
- 90: RAID structure
- 102: disk array device
- 200: NAND block
- 210: MAP status management table
- 211: LBA
- 212: MAP
- 220: UNMAP status return unit
- 700: computer
- 701: CPU
- 702: storage unit
- 703: storage device
- 706: communication unit
- 707: recording medium
- 708: interface unit

## Claims

1. A disk array device comprising:
a solid state drive means for providing status information indicating whether a physical region constituting a unit to be deleted is allocated to a logical block addressing; and
control means for, upon receipt of zero data in which values of data and a trailer are all zero from the solid state drive, transmitting the data to a host apparatus in accordance with the status information provided.

2. The disk array device according to Claim 1,
wherein the control means transmits a status acquisition command to the solid state drive upon receipt of the zero data, and
the solid state drive transmits the status information to the control means upon receipt of the status acquisition command.

3. The disk array device according to Claim 1 or 2,
wherein the solid state drive adds the status information corresponding to the data when transmitting the data to the control means, to thereby provide the status information to the control means.

4. The disk array device according to any one of Claims 1 to 3,
wherein the control means receives a first unmap command including designation of a range smaller than a predetermined range, transmits a second unmap command with respect to the range smaller than the predetermined range to the solid state drive when designation of the logical block addressing in the first unmap command received belongs to the solid state drive, and writes zero, when the designation of the logical block addressing belongs to the hard disk drive, in a region of the hard disk drive corresponding to the range smaller than the predetermined range,
the control means further receives a read command,, and when data received by reading corresponding to the read command is the zero data,
transmits the received data to the host apparatus in accordance with the status information when the designation of the logical block addressing in the read command received belongs to the solid state drive, and performs an error processing when the designation of the logical block addressing belongs to the hard disk drive.

5. The disk array device according to Claim 4,
wherein the predetermined range is a physical extent which a physical region of the array in the disk array system is divided into a predetermined size, to be allocated to a logical volume of the disk array device when a write access is made to the logical volume.

6. A solid state drive comprising providing means for providing status information indicating whether a physical region constituting a unit to be deleted is mapped in a logical block addressing, in response to a command received from control means,
wherein the control means transmits, upon receipt of zero data in which values of data and a trailer are all zero from the solid state drive, the data to a host apparatus in accordance with the status information.

7. A solid state drive comprising providing means for providing status information indicating whether a physical region constituting a unit to be deleted is mapped in a logical block addressing, in response to a command received from control means,
wherein the control means transmits, upon receipt of zero data in which values of data and a trailer are all zero from the solid state drive, the data to a host apparatus in accordance with the status information,
the solid state drive being configured to add the status information corresponding to the data when transmitting the data to the control means, to thereby provide the status information to the control means.

8. A control device comprising means which transmits, upon receipt of zero data in which values of data and a trailer are all zero from the solid state drive, the data to a host apparatus in accordance with status information indicating whether a physical region constituting a unit to be deleted is mapped in a logical block addressing and which is provided from the solid state drive.

9. A disk control method comprising causing a computer to transmit, upon receipt of zero data in which values of data and a trailer are all zero from the solid state drive, the data to a host apparatus in accordance with status information indicating whether a physical region constituting a unit to be deleted is mapped in a logical block addressing and which is provided from the solid state drive.

10. A computer-readable non-transitory recording medium recording a program configured to cause a computer to transmit, upon receipt of zero data in which values of data and a trailer are all zero from the solid state drive, the data to a host apparatus in accordance with status information indicating whether a physical region constituting a unit to be deleted is mapped in a logical block addressing and which is provided from the solid state drive.
